(19)

Europäisches
Patentamt
European
Patent Office
Office européen
des brevets

(11) **EP 4 343 589 A1**

(12) **EUROPEAN PATENT APPLICATION**

(43) Date of publication:
**27.03.2024 Bulletin 2024/13**

(21) Application number: **22197718.4**

(22) Date of filing: **26.09.2022**

(51) International Patent Classification (IPC):
**G06F 18/21** (2023.01)  **G06V 10/776** (2022.01)

(52) Cooperative Patent Classification (CPC):
**G06V 10/776; G06F 18/217; G06N 3/0464;
G06N 3/0475; G06N 3/048; G06N 3/094**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventor: **Yang, Yinchong
85579 Neubiberg (DE)**

(74) Representative: **Siemens Patent Attorneys
Postfach 22 16 34
80506 München (DE)**

(54) **COMPUTING DEVICE FOR QUANTIFYING THE ROBUSTNESS OF A MODEL AND METHOD THEREOF**

(57)    A computing device for quantifying the robustness of the predictions of a model against perturbations of its input data, comprising: an input module, configured to obtain the model and at least one perturbation function of a number of perturbation functions; a perturbation module, configured to apply the at least one perturbation function to the input data of the model and to determine a minimal perturbation of the input data that changes at least one of the predictions of the model; and an output module, configured to output the minimal perturbation of the input data corresponding to the at least one perturbation function.

## FIG 1

EP 4 343 589 A1

**Description**

The present invention relates to a computer device and a computer-implemented method to certify or quantify the robustness of a model against perturbations or variations of its input data.

The invention is mostly described with respect to models that involve artificial intelligence (AI) methods, but the principles of the invention have a broader scope and apply equally well to generic computer vision models.

AI solutions are nowadays used in relation to a large variety of industrial applications. One of the most relevant uses of artificial intelligence is in pattern recognition. However, it is known that AI models, while they can be more sensitive to subtle patterns than humans (e.g. in the prediction of the presence of molecular biomarkers related to different cancers in medical applications), they can also lack robustness under perturbations, sometimes even with disturbances that cannot be perceived by the human eye.

While there are continuous improvements to make these models more robust, one needs a reliable way to quantify or certify the robustness of a model. One line of research is based on gradient-based adversaries. Approaches such as linear programming (e.g., mixed integer linear programming of rectified linear activation unit (ReLu) networks), Lipschitz constant estimation or Bayesian optimization provide a formal test of robustness of a model.

These methods provide very conservative estimates of the robustness of a model, since the gradient represents the maximal change of the loss function. As a result, the assessment of robustness might turn out to be too pessimistic, i.e., in real applications a model might be more robust than gradient-based adversaries would indicate. Additionally, it is hard to connect the information delivered by a gradient-based adversarial analysis to the observable perturbations that might affect a particular model.

On the other hand, for some models the loss function that the optimizer minimizes might not have a well-defined gradient, e.g., because the function is not smooth enough or simply not differentiable with respect to the degree of perturbation. In these cases an alternative to gradient-based adversaries is definitely needed.

It is an object of the present invention to provide an improved way to quantify and certify how robust the predictions of a model are with respect to realistic perturbations of its input data, i.e., perturbations that are likely to occur in the environment where the model is to be deployed.

The purpose of this invention is achieved through a device with the features disclosed in claim 1 and a computer-implemented method with the features detailed in claim 13. Preferred embodiments of the invention with advantageous features are given in the dependent claims.

A first aspect of the invention provides a computing device for quantifying and/or certifying the robustness of the predictions of a model against perturbations of its input data, comprising: an input module, configured to obtain the model and at least one perturbation function of a number of perturbation functions; a perturbation module, configured to apply the at least one perturbation function to the input data of the model and to determine a minimal perturbation of the input data that changes at least one of the predictions of the model; and an output module, configured to output the minimal perturbation of the input data corresponding to the at least one perturbation function.

A model in this invention is understood as a description which is implementable at least partially as a programming code comprising executable programs. The model may comprise an artificial neural network, in which case it will be denoted as an artificial intelligence model.

Whenever herein an artificial neural network is mentioned, it shall be understood as a computerized entity able to implement different data analysis methods broadly described under the terms artificial intelligence, machine learning, deep learning or computer learning. The artificial neural network can be a convolutional neural network (CNN) or any other neural network or combination thereof.

The input module and/or the perturbation module and/or the output module are broadly understood as entities capable of acquiring, obtaining, receiving or retrieving generic data and/or instructions through a user interface and/or programming code and/or executable programs and any combination thereof and delivering them for further processing. The perturbation module is in particular adapted to run the executable programs of a model.

The input module and/or the perturbation module and/or the output module, or parts thereof, may therefore contain, at least, a central processing unit, CPU, and/or at least one graphics processing unit, GPU, and/or at least one field-programmable gate array, FPGA, and/or at least one application-specific integrated circuit, ASIC and/or any combination of the foregoing. Each of them may further comprise a working memory operatively connected to the at least one CPU and/or a non-transitory memory operatively connected to the at least one CPU and/or the working memory. Each of them may be implemented partially and/or completely in a local apparatus and/or partially and/or completely in a remote system such as by a cloud computing platform.

All of the elements of the computing device may be realized in hardware and/or software, cable-bound and/or wireless, and in any combination thereof. Any of the elements may comprise an interface to an intranet or the Internet, to a cloud computing service, to a remote server and/or the like.

In particular, the computing device of the invention may be implemented partially and/or completely in a local apparatus, e.g. a computer, in a system of computers and/or partially and/or completely in a remote system such as a cloud computing platform.

In systems based on cloud computing technology, a large number of devices is connected to a cloud computing system via the Internet. The devices may be located in a remote facility connected to the cloud computing system. For example, the devices can comprise, or consist of, equipments, sensors, actuators, robots, and/or machinery in an industrial set-up(s). The devices can be medical devices and equipments in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographically distributed and connected to each other via a network. A dedicated platform (hereinafter referred to as 'cloud computing platform') is installed on the servers/processors for providing above functionality as a service (hereinafter referred to as 'cloud service'). The cloud computing platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users.

A second aspect of the present invention provides a computer-implemented method to quantify and/or certify the robustness of the predictions of a model against perturbations of its input data, the method comprising the following steps: (a) obtaining a model and at least one perturbation function (b) applying the at least one perturbation function to the input data of the model; (c) determining the minimal perturbation of the input data that changes at least one of the predictions of the model; and (d) outputting the minimal perturbation of the input data corresponding to the at least one perturbation function.

In particular, the method according to the second aspect of the invention may be carried out by the system according to the first aspect of the invention. The features and advantages disclosed herein in connection with the energy management system are therefore also disclosed for the method, and vice versa.

According to a third aspect, the invention provides a computer program product comprising executable program code configured to, when executed, perform the method according to the second aspect of the present invention.

According to a fourth aspect, the invention provides a non-transient computer-readable data storage medium comprising executable program code configured to, when executed, perform the method according to the second aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform the method according to the second aspect of the present invention.

One of the main ideas underlying the present invention is to provide a computing device that can assess the robustness (or stability) of the predictions coming from a model, preferably an artificial intelligence model, against realistic perturbations of its input data in a quantitative way. The computing device is adapted to input a model and a perturbation function and output the minimal perturbation of the input data such that there is a change in the predictions of the model.

The computing device of the invention is especially adapted to assess the robustness using natural perturbations as opposed to an assessment based on gradient-based adversaries. Natural perturbations are broadly defined as perturbations of the input data of the model that are realistic, i.e. likely to be encountered within the input data used by the model. As such, natural perturbations are therefore interpretable and intuitive, and serve as better metrics to evaluate the robustness of a model in real-life scenarios of industrial application.

The device as described above allows for a simple implementation of a computer-implemented method to certify or quantify the robustness of the predictions of a model against perturbations of its input data. In a first step, a model and a perturbation function are obtained. In another step, the perturbation function is applied in a quantitative way to the input data of the model. In a further step, a minimal perturbation of the input data is determined, wherein this minimal perturbation corresponds to the smallest variation applied to the input data leading to a change in the predictions of the model. In another step this minimal perturbation is output as an indicator of the robustness of the model against the perturbations associated with a perturbation function.

One advantage of the present invention is that the robustness of a model is estimated with natural perturbations, i.e., with perturbations that are likely to be found when applying the model to real data. In comparison with conventional gradient-based adversary estimators, which are rather formal and by construction provide a conservative estimate, the present invention provides a realistic (and thus more useful) estimate.

A further advantage of the present invention is that the natural perturbations are interpretable by a human user. For instance, in classification models the natural perturbations can be even visualized.

Another advantage of the present invention is that it is applicable to generic models, even to those where a gradient-based adversary approach is not possible, e.g. with models with a cost function where the gradient is ill-defined. The principles of the invention actually apply even to models that do not incorporate artificial neural networks.

Advantageous embodiments and further developments follow from the dependent claims as well as from the description of the different preferred embodiments illustrated in the accompanying figures.

According to some embodiments, refinements, or variants of embodiments, the input data of the model comprises image data and/or time series data and/or tabular data and/or generic data. As already emphasized above, one of the advantages of the invention is that it applies to generic models, which can be based on different kinds of data and combinations thereof.

According to some embodiments, refinements, or variants of embodiments, the perturbation module comprises a perturbation library unit, which comprises at least the following perturbation functions:

(a) for image data:

- geometric perturbations (e.g. rotations, shifts, shears, grid distortion, zooming or cropping);
- pixel perturbations (e.g. changes in brightness, contrast, saturation or hue);
- special effect perturbations (e.g. blurring, JPEG compression or downscaling);

(b) for time series data:

- temporal perturbations (e.g. rotations, shifts or Brownian noise);
- special perturbations (e.g. random sampling or weighted probabilistic sampling);

(c) for tabular data:

- discrete (categorical) sampling;

(d) for generic data:

- Gaussian noise;
- uniform noise;
- missingness.

The previous list of natural perturbations is not exhaustive but gives an idea of how they can be ordered into categories, which can be stored in a library or database. This list of categories can, e.g., be shown in a user interface, from which a user can choose the perturbation function under which the model is to be tested.

According to some embodiments, refinements, or variants of embodiments, the perturbation functions in the perturbation library unit have default mathematical parameterizations. Associated to each of the categories there is a mathematical representation, such that the perturbation function can be quantified. For instance, rotations are parameterized by an angle, and Gaussian noises by the standard deviation. With pixel perturbations, one can specify the proportion of pixels that undergo the perturbation.

According to some embodiments, refinements, or variants of embodiments, the perturbation module comprises a threshold unit, configured to set a threshold value for each prediction of the model. As a first example, one can consider an artificial intelligence classifier that identifies different species of animals. It can be decided that a prediction is made by the model if the identification probability of a certain class is above 50%. A change in the predictions of this first model will then happen when the identification probability of that certain class goes under 50%. As a second example, one can consider a model to be used for medical applications, e.g. to determine if a patient has a certain disease. In this cases, a prediction is typically only made when the identification probability is above 90%. A change in the predictions of this second model takes place if the identification probability of a class goes under 90%.

This information about the thresholds for predictions, which depends on the model, is collected by the threshold unit and used to define the minimal perturbation.

According to some embodiments, refinements, or variants of embodiments, the input module comprises a customization unit, configured to assign a customized mathematical parameterization to a selected perturbation function This is particularly useful if the wanted perturbation function is not included in some perturbation database, e.g., in the perturbation library unit mentioned above. However, the device also allows a customer to mathematically parametrize an already existing perturbation function in a way different than the default parameterization.

According to some embodiments, refinements, or variants of embodiments, the input module comprises a range unit, configured to obtain a search range associated with the perturbation function, and a tolerance unit, configured to obtain a tolerance associated with the perturbation function.

For a specific application, the full parameter space describing the perturbation function may not be needed. For instance, for a model of image analysis in the context of autonomous driving, brightness perturbations may be constrained to a certain range, which is based e.g. on the expected brightness of images on sunny and on cloudy days. This feature is advantageous to speed up the determination of the minimal perturbation.

Likewise, in certain applications the minimal perturbation may have to be determined with a certain precision, which can be determined with a tolerance. For instance, for a certain application the robustness of a model against rotations may require a precision of one degree, while in certain other applications a precision of 0.1 degrees may be needed.

According to some embodiments, refinements, or variants of embodiments, the model is an artificial intelligence model with a cost function that is not necessarily differentiable. As mentioned in the foregoing, the invention has a broad application scope can also be applied to artificial intelligence models where a gradient cannot be defined, e.g., because the cost function happens to be non-differentiable for some range of the parameters associated to a perturbation.

According to some embodiments, refinements, or variants of embodiments, the perturbation module is adapted to implement a recursive grid search algorithm and/or a recursive binary search algorithm for the determination of the minimal perturbation of the input data. Binary and grid search algorithms are two ways of implementing derivative-free optimizers, i.e. optimizers which are not gradient-based and can be applied most advantageously to artificial intelligence models where a gradient cannot be defined.

According to some embodiments, refinements, or variants of embodiments, the recursive grid search algorithm and the recursive binary search algorithm are adapted to implement a threshold function based on a difference between the perturbed and the unperturbed input data, wherein the threshold function being different from zero corresponds to a perturbation of the input data that changes at least one of the predictions of the model.

In other words, if $x$ is the original data sample and $\pi_\theta(x)$ is a perturbation function, i.e. the mathematical parameterization associated to a perturbation function with a parameter $\theta$, the search algorithms are based on a threshold function $\delta(f(x), f(x+\pi_\theta(x)))$, where $f(x)$ is a representation of the model and $f(x+\pi_\theta(x))$ the model when the input data has been perturbed. This function $\delta(f(x), f(x+\pi_\theta(x)))$ determines how different the predictions of the model using the original data, $f(x)$, and using the perturbed data, $f(x+\pi_\theta(x))$, are. It may be defined to be zero when the model and its perturbation are similar and different from zero as long as the model and its perturbation become significantly different, e.g., the predictions of the model and its perturbation differ. The minimal perturbation is defined as the minimal $\theta$ such that $\delta(f(x), f(x+\pi_\theta(x)))$ is no longer zero.

For example, for a classification model one would have f: $R^d \rightarrow \{0, 1\}^k$. A choice for the threshold function could be $\delta(f(x), f(x+\pi_\theta(x))) = I(\text{argmax}_k f(x+\pi_\theta(x))_k \neq \text{argmax}_k f(x)_k)$ where I is the indicator function. Alternatively,

$$\delta(f(x), f(x+\pi_\theta(x))) = \max(0, \max_k f(x+\pi_\theta(x))_k - \max_k f(x)_k)$$

would also quantify the difference between the original and the perturbed prediction.

According to some embodiments, refinements, or variants of embodiments, the recursive grid search algorithm and the recursive binary search algorithm are configured to apply perturbations to the input data in a one-sided manner.

In general there is no guarantee that the threshold function $\delta(f(x), f(x+\pi_\theta(x))$ is convex, i.e., that after the minimal perturbation has been found, higher values of the perturbation parameter also lead to significant changes in the predictions. To this end, the binary and grid search algorithms are designed to approach the minimal degree of perturbation from the left side.

Providing as input the model f(), a tolerance $\alpha$ and the data sample $x$ in $R^d$ obtained by the input module, and employing a search range with a lower bound l (e.g. l=0) and an upper bound u, an example of a binary search algorithm could, e.g., the following function in Python code:

```
Function BINARY_SEARCH(u, l):
    while δ(f₁(x), f(x+πᵤ(x))) = 0
        l = u
        u = u*2
    while u - l > α:
        m = u+(u - l) / 2
        if δ(f(x), f(x+πₘ(x))) > 0:
            return BINARY_SEARCH(l, m)
        else:
            return BINARY_SEARC(m, u)


    return u
```

Providing as input the model f(), a tolerance a, the data sample $x$ in $R^d$ and a grid size n obtained by the input unit, and employing a search range with a lower bound 1 (e.g. 1=0) and an upper bound u, an example of a grid search algorithm could, e.g., defined by the following functions in pseudo code:

```
Function CREATE_GRID(u, l, n):
    for i in 1…n:
        zᵢ = u + i*(l-u)/n
    return zᵢ


Function GRID_SEARCH(u, l, n):
    while u - l > α:
        z = CREATE_GRID(u, l, n)
        l = max l*: δ(f(x), f(x+πₗ*(x))) = 0 for l* in z
        u = min u*: δ(f(x), f(x+πₗ*(x))) > 0 for u* in z
        GRID_SEARCH(u, l, n)
    return u
```

According to some embodiments, refinements, or variants of embodiments, the output module comprises a display unit, configured to produce a visualization of the minimal perturbation of the input data. This is particularly interesting in image-based models, where it can be assessed how the increasing perturbation of the image data eventually drives the model to modify its predictions. It is also possible that the display unit shows a sequence of the input data ordered from the unperturbed case until the minimal perturbation is found.

The invention can be applied to a number of contexts with industrial data. An example of its application has to do with AI-based models for pattern recognition in autonomous driving. The present invention can evaluate the robustness of such a model when submitted, e.g., to bad weather conditions.

This can be mimicked by perturbing the brightness and/or the contrast of the pixels until the model fails to recognize certain objects, e.g., traffic lights or pedestrians. The present invention can also evaluated the robustness of such a model against the quality of images and/or cameras, e.g. by masking pixels.

Another example can be related to the operations of a robotic arm, for instance in the manufacture of semiconductor devices. The method and device of the present invention can assess the robustness of the model for pattern recognition that the robotic arm uses when a semiconductor is slightly rotated. The robotic arm can also be used for surgical applications. In this case, different deformations of the image data of a patient (e.g., rotations, shifts, shears, distortion) can be used to assess the robustness of the model.

Further applications can be found in the classification of workpiece quality based on image data, anomaly detection (imbalanced classification) based on sensor data, and/or object detection and image segmentation for vehicle traffic data and for medical applications, e.g., in connection with functional magnetic resonance imaging (fMRI).

Although here, in the foregoing and also in the following, some functions are described as being performed by modules, it shall be understood that this does not necessarily mean that such modules are provided as entities separate from one another. In cases where one or more modules are provided as software, the modules may be implemented by program code sections or program code snippets, which may be distinct from one another but which may also be interwoven or integrated into one another.

Similarly, in cases where one or more modules are provided as hardware, the functions of one or more modules may be provided by one and the same hardware component, or the functions of several modules may be distributed over several hardware components, which need not necessarily correspond to the modules. Thus, any apparatus, system, method and so on which exhibits all of the features and functions ascribed to a specific module shall be understood to comprise, or implement, said module. In particular, it is a possibility that all modules are implemented by program code executed by the computing device, for example a server or a cloud computing platform.

The above embodiments and implementations can be combined with each other as desired, as far as this is reasonable.

Further scope of the applicability of the present method and apparatus will become apparent from the following figures, detailed description and claims. However, it should be understood that the detailed description and specific examples, while indicating preferred embodiments of the invention, are given by way of illustration only, since various changes and modifications within the spirit and scope of the invention will become apparent to those skilled in the art.

Aspects of the present disclosure will be better understood with reference to the following figures.

In the figures:

Fig. 1 is a schematic depiction of a computing device for quantifying the robustness of the predictions of a model against perturbations of its input data according to an embodiment of the present invention;

Fig. 2 is a block diagram showing an exemplary embodiment of a computer-implemented method to quantify the robustness of the predictions of a model against perturbations of its input data;

Fig. 3 is a schematic illustration of how the computing device may operate when perturbing the input data of a model of cat species identification with blurring, according to an embodiment of the present invention;

Fig. 4 is a schematic illustration of how the computing device may operate when perturbing the input data of a model of cat species identification with grid distortion, according to an embodiment of the present invention;

Fig. 5 is a schematic block diagram illustrating a computer program product according to an embodiment of the third aspect of the present invention; and

Fig. 6 is a schematic block diagram illustrating a non-transitory computer-readable data storage medium according to an embodiment of the fourth aspect of the present invention.

Parts in the different figures that correspond to the same elements have been indicated with the same reference numerals.

The components in the drawings are not necessarily to scale, emphasis being placed instead upon clearly illustrating the principles of the present disclosure. Likewise, certain components can be shown in generalized or schematic form in the interest of clarity and conciseness. In some instances, well-known structures and devices are shown in block diagram form in order to avoid obscuring the concepts of the present invention.

The numeration of the steps in the methods are meant to ease their description. They do not necessarily imply a certain ordering of the steps. In particular, several steps may be performed concurrently.

The detailed description includes specific details for the purpose of providing a thorough understanding of the present invention. However, it will be apparent to those skilled in the art that the present invention may be practised without these specific details.

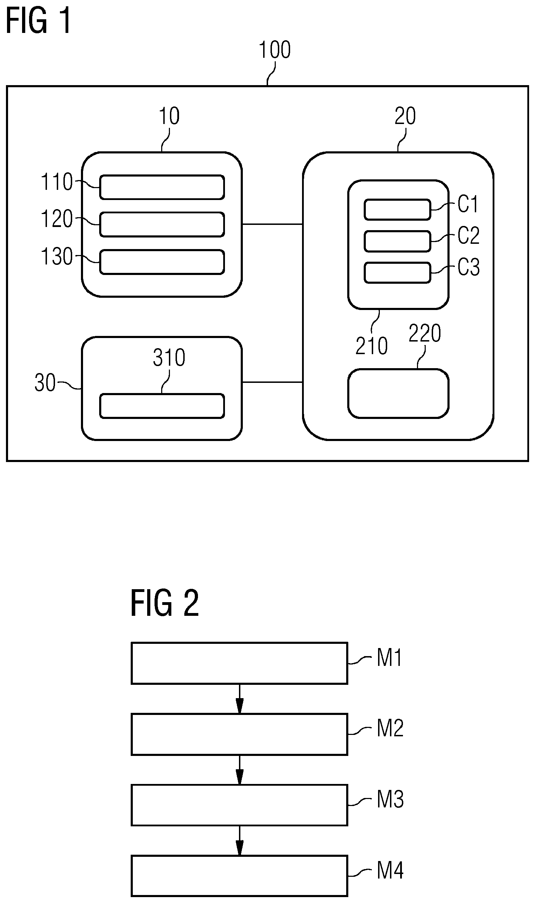

Fig. 1 shows a schematic depiction of a computing device 100 for quantifying the robustness of the predictions of a model against perturbations of its input data according to an embodiment of the present invention.

The computing device comprises an input module 10, a perturbation module 20 and an output module 30.

The input module 10 is configured to obtain a model, either an artificial intelligence model or a generic model of computer vision analysis, together with at least a perturbation function C1-C3 under which the robustness of the model is to be tested and the input data of the model. The input module is adapted to process image data, time series data, tabular data or generic data, depending on the characteristics of the obtained model.

In some embodiments, such as the one described in Fig. 1, the input module 10 comprises a customization unit 110, configured to assign a customized mathematical parameterization to a perturbation function C1-C3. The input module further comprises a range unit 120 and a tolerance unit 130, configured to obtain, respectively, a search range and a tolerance for the parameter associated with the mathematical representation of the perturbation function C1-C3.

The perturbation module 20 is configured to apply each of the selected perturbation functions C1-C3 to the input data of the model. With the use, e.g., of a search algorithm, such as the grid search and binary search algorithms described in the foregoing, a minimal perturbation is determined for each perturbation function C1-C3, which quantifies the robustness of the model. The minimal perturbation, as detailed in the foregoing, is defined as the minimal variation of the input data that significantly changes the outcome of the model, e.g. it leads to a change of at least one prediction of the model.

The perturbation module 20 comprises a perturbation library unit 210, in which a number of perturbation functions C1, C2, C3 are listed. Examples of perturbation functions C1-C3 include grid deformation, image blurring, or the introduction of Gaussian noise. Each of the perturbation functions C1-C3 is assigned a mathematical description or parameterization, such that the associated perturbations can be quantified.

In some embodiments of the invention, the perturbation module 20 comprises a threshold unit 220, through which the criteria for a prediction is specified. For example, in an artificial intelligence model for cat species identification, a probability greater than, e.g., 50% may be considered sufficient for a prediction. In contrast, in an artificial intelligence model for medical applications, a probability of, e.g., 90% may be considered the threshold from a reliable identification (leading to a prediction) to a non-reliable identification (leading to no prediction).

The output module 30 is configured to output the minimal perturbation found by the perturbation module 20 corresponding to the perturbation function C1-C3. In some embodiments, the output module 30 comprises a display unit 310, configured to produce a visualization of the minimal perturbation of the input data. Since the inventions processes natural or realistic perturbations, i.e. perturbations that can take place in real applications, a visualization of the minimal perturbation makes the robustness of the model against a particular perturbation function C1-C3 easier to interpret.

Fig. 2 shows a block diagram showing an exemplary embodiment of a computer-implemented method to quantify the robustness of the predictions of a model against perturbations of its input data, preferably to be used with the computer device described in Fig. 1.

In a step M1, a model (including its programming code and its input data) is obtained, together with a perturbation function (C1-C3 in Fig. 1), under which the robustness of the model is to be tested.

In another step M2, the perturbation function C1-C3 is applied to the input data of the model. For instance, if the perturbation function C1-C3 is associated with rotations of image data, the image data is progressively rotated.

In a step M3, a minimal perturbation is determined. This minimal perturbation is defined as the minimal variation of the input data that introduces changes in the original predictions of the model, i.e. the predictions made with the unperturbed input data. For instance, in a model for object identification in the context of autonomous driving, at a specific rotation angle of a landscape (input data), an object correctly predicted to be a traffic light with the unrotated input data may cease to be predicted so.

The determination of the minimal perturbation in step M3 is preferably performed with the implementation of a search algorithm, in particular with the binary search and grid search algorithms described in the foregoing.

In another step M, the minimal perturbation of the input data corresponding to the perturbation function C1-C3 is output. This can be either done with a user interface in command line and/or with a graphical representation of the input data when perturbed with the minimal perturbation.

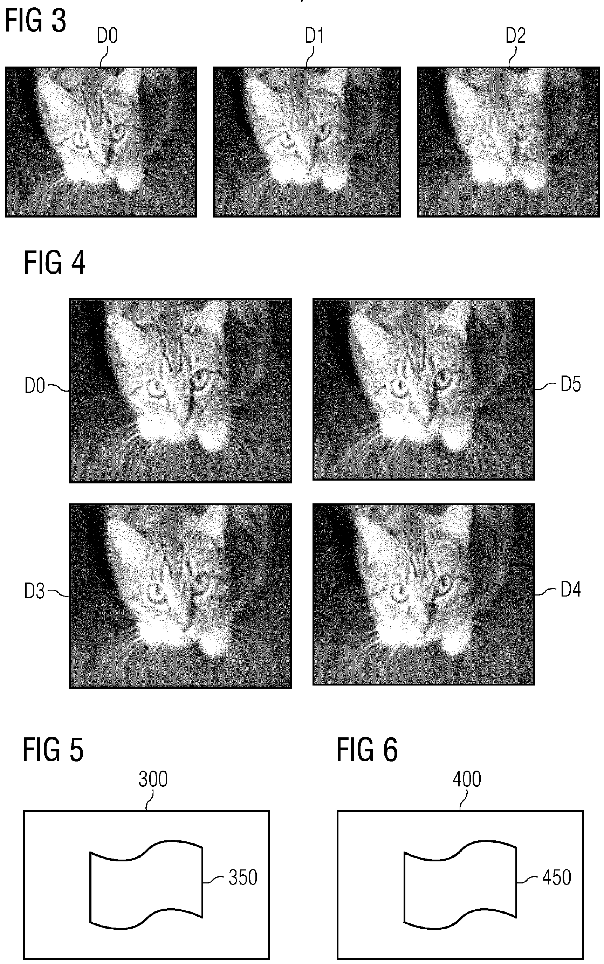

Fig. 3 shows a schematic illustration of how the computing device 100, e.g. the one described in Fig. 1, may operate when perturbing the input data of a model of cat species identification with blurring, according to an embodiment of the present invention.

The picture D0 shows a cat, specifically predicted by the model to be a tabby cat. The input data (in this case the picture D0) is perturbed such that the picture D0 is blurred, mildly as in picture D1, or strongly, as in picture D2.

With the mild blurring shown in picture D1, the model still predicts the cat to be a tabby cat. At the level of the computing device 100, the blurring is mathematically parametrized by the parameter $\theta$ and the input data $\boldsymbol{x}$ (in this case the image of the tabby cat) is perturbed to $\boldsymbol{x}+\pi_\theta(\boldsymbol{x})$. The search algorithm finds that the blurring (the value of $\theta$) that corresponds to picture D1 gives $\delta(f(\boldsymbol{x}), f(\boldsymbol{x}+\pi_\theta(\boldsymbol{x})))=0$, indicating that the predictions of the perturbed and unperturbed model have not changed.

In contrast, with the strong blurring shown in picture D2, the model predicts the cat to be an Egyptian cat. At the level of the computing device 100, the search algorithm finds that the blurring (the value of $\theta$) that corresponds to picture D1 gives $\delta(f(\boldsymbol{x}), f(\boldsymbol{x}+\pi_\theta(\boldsymbol{x})))>0$, indicating that the predictions of the perturbed and unperturbed model have now changed. Picture D2 may actually correspond to the minimal blurring (i.e., the minimal value of $\theta$ that changes the prediction of the cat species). In this case, picture D2 and the associated minimal value are output by the output module 30 of the computing device 100.

In both D1 and D2, the blurring (an example of a natural perturbation) is an interpretable perturbation, i.e. recognizable at naked eye.

Fig. 4 shows a schematic illustration of how the computing device 100, e.g. the one described in Fig. 1, may operate when perturbing the input data of a model of cat species identification with grid distortion, according to an embodiment of the present invention.

In this second example, the picture D0, which the model predicts to be a taddy cat, is perturbed with a mild grid distortion, shown in picture D3. In this case, even with the mild grid distortion of picture D3, the model predicts the cat to be an Egyptian cat. Accordingly, at the level of the computing device 100, the search algorithm finds that the grid distortion (parametrized as $\theta$) that corresponds to picture D3 gives $\delta(f(\boldsymbol{x}), f(\boldsymbol{x}+\pi_\theta(\boldsymbol{x}))) > 0$. If picture D3 corresponds to the minimal grid distortion (i.e., the minimal value of $\theta$ that changes the prediction of the cat species), then picture D3 and the associated minimal value would be output by the output module 30 of the computing device 100.

Picture D4 shows the image data (the picture of the cat of D0) after it has undergone a strong grid distortion. In this case, the model still predicts the cat to be an Egyptian cat, indicating that the threshold function $\delta(f(\boldsymbol{x}), f(\boldsymbol{x}+\pi_\theta(\boldsymbol{x})))$ is convex, at least between the values for $\theta$ between D3 and D4.

Picture D5 shows for comparison the result of a device that assesses the robustness of the model with a conventional gradient-based adversary optimizer. The adversarial perturbation shown in picture D5 predicts the cat to be an Egyptian cat. The adversarial perturbation is not associated to any of the perturbation functions C1-C3 of the invention and D5 might actually portray a perturbation of the input data that does not correspond to any realistic variation of such input data.

Fig. 5 shows a schematic block diagram illustrating a computer program product 300 according to an embodiment of the third aspect of the present invention. The computer program product 300 comprises executable program code 350 configured to, when executed, perform the method according to any embodiment of the second aspect of the present invention, in particular as it has been described with respect to the preceding figures.

Fig. 6 shows a schematic block diagram illustrating a non-transitory computer-readable data storage medium 400 according to an embodiment of the fourth aspect of the present invention. The data storage medium 400 comprises executable program code 450 configured to, when executed, perform the method according to any embodiment of the second aspect of the present invention, in particular as it has been described with respect to the preceding figures.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

The previous description of the disclosed embodiments are merely examples of possible implementations, which are provided to enable any person skilled in the art to make or use the present invention. Various variations and modifications of these embodiments will be readily apparent to those skilled in the art, and the generic principles defined herein may be applied to other embodiments without departing from the spirit or scope of the present disclosure. Thus, the present invention is not intended to be limited to the embodiments shown herein but it is to be accorded the widest scope consistent with the principles and novel features disclosed herein. Therefore, the present invention is not to be limited except in accordance with the following claims.

## Claims

1. A computing device (100) for quantifying the robustness of the predictions of a model against perturbations of its input data, comprising:

   an input module (10), configured to obtain the model and at least one perturbation function of a number of perturbation functions (C1-C3);
   a perturbation module (20), configured to apply the at least one perturbation function (C1-C3) to the input data of the model and to determine a minimal perturbation of the input data that changes at least one of the predictions of the model; and
   an output module (30), configured to output the minimal perturbation of the input data corresponding to the at least one perturbation function (C1-C3).

2. The computing device (100) according to claim 1, wherein the input data of the model comprises image data and/or time series data and/or tabular data and/or generic data.

3. The computing device (100) according to claims 1 and 2, wherein the perturbation module (20) comprises a perturbation library unit (210), which comprises at least the following perturbation functions (C1-C3):

(e) for image data:

- geometric perturbations (e.g. rotations, shifts, shears, grid distortion, zooming or cropping);
- pixel perturbations (e.g. changes in brightness, contrast, saturation or hue);
- special effect perturbations (e.g. blurring, JPEG compression or downscaling);

(f) for time series data:

- temporal perturbations (e.g. rotations, shifts or Brownian noise);
- special perturbations (e.g. random sampling or weighted probabilistic sampling);

(g) for tabular data:

- discrete (categorical) sampling;

(h) for generic data:

- Gaussian noise;
- uniform noise;
- missingness.

4. The computing device (100) according to claim 3, wherein the perturbation functions (C1-C3) in the perturbation library unit (210) have default mathematical parameterizations.

5. The computing device (100) according to any of the previous claims, wherein the perturbation module (20) comprises a threshold unit (220), configured to set a threshold value for each prediction of the model.

6. The computing device (100) according to any of the previous claims, wherein the input module (10) comprises a customization unit (110), configured to assign a customized mathematical parameterization to a selected perturbation function (C1-C3).

7. The computing device (100) according to any of the previous claims, wherein the input module (10) comprises a range unit (120), configured to obtain a search range associated with the perturbation function (C1-C3), and a tolerance unit (130), configured to obtain a tolerance associated with the perturbation function (C1-C3).

8. The computing device (100) according to any of the previous claims, wherein the model is an artificial intelligence model with a cost function that is not necessarily differentiable.

9. The computing device (100) according to any of the previous claims, wherein the perturbation module (20) is adapted to implement a recursive grid search algorithm and/or a recursive binary search algorithm for the determination of the minimal perturbation of the input data.

10. The computing device (100) according to claim 9, wherein the recursive grid search algorithm and the recursive binary search algorithm are adapted to implement a threshold function based on a difference between the perturbed and the unperturbed input data, wherein the threshold function being different from zero corresponds to a perturbation of the input data that changes at least one of the predictions of the model.

11. The computing device (100) according to claim 9, wherein the recursive grid search algorithm and the recursive binary search algorithm are configured to apply perturbations to the input data in a one-sided manner.

12. The computing device (100) according to claim 1, wherein the output module (30) comprises a display unit (310), configured to produce a visualization of the minimal perturbation of the input data.

13. A computer-implemented method to quantify the robustness of the predictions of a model against perturbations of its input data, preferably to be implemented with the computing device (100) according to any of the claims 1 to 12, comprising the following steps:

obtaining (M1) a model and at least one perturbation function (C1-C3);

applying (M2) the at least one perturbation function (C1-C3) to the input data of the model;
determining (M3) the minimal perturbation of the input data that changes at least one of the predictions of the model; and
outputting (M4) the minimal perturbation of the input data corresponding to the at least one perturbation function (C1-C3).

14. A computer program product (300) comprising executable program code (350), which is configured, when executed, to perform the computer-implemented method according to claim 13.

15. A non-transient computer-readable data storage medium (400) comprising executable program code (450), which is configured, when executed, to perform the computer-implemented method according to claim 13.

## FIG 1

## FIG 2

FIG 3

D0

D1

D2

FIG 4

D0

D5

D3

D4

FIG 5

300

350

FIG 6

400

450

Europäisches
Patentamt

European
Patent Office

Office européen
des brevets

# EUROPEAN SEARCH REPORT

Application Number

EP 22 19 7718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JONAS RAUBER ET AL: "Foolbox: A Python toolbox to benchmark the robustness of machine learning models", ARXIV.ORG, CORNELL UNIVERSITY LIBRARY, 201 OLIN LIBRARY CORNELL UNIVERSITY ITHACA, NY 14853, 13 July 2017 (2017-07-13), XP081309370, | 1,2,5,6, 8,13-15 | INV. G06F18/21 G06V10/776 |
| Y | * the whole document * | 3,4 | |
| X | NICHOLAS CARLINI ET AL: "Ground-Truth Adversarial Examples", ARXIV.ORG, CORNELL UNIVERSITY LIBRARY, 201 OLIN LIBRARY CORNELL UNIVERSITY ITHACA, NY 14853, 29 September 2017 (2017-09-29), XP080824572, * pages 1-6 * * pages 11,12 * | 1,2,7-15 | |
| Y | "Securing Artificial Intelligence (SAI); Security Testing of AI", ETSI DRAFT SPECIFICATION; SAI-003V0016.DOCX, EUROPEAN TELECOMMUNICATIONS STANDARDS INSTITUTE (ETSI), 650, ROUTE DES LUCIOLES ; F-06921 SOPHIA-ANTIPOLIS ; FRANCE , no. V0.0.16 16 July 2022 (2022-07-16), pages 1-31, XP014437886, Retrieved from the Internet: URL:ftp://docbox.etsi.org/ISG/SAI/70-Draft /003/SAI-003v0016.docx [retrieved on 2022-07-16] * pages 11-20 * | 3,4 | TECHNICAL FIELDS SEARCHED (IPC) G06F G06N G06V |

The present search report has been drawn up for all claims

| Place of search | Date of completion of the search | Examiner |
|---|---|---|
| The Hague | 8 March 2023 | Hermes, Lothar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)